## Europäisches Patentamt

## European Patent Office

## Office européen des brevets

(19)

(11) Veröffentlichungsnummer: **0 124 850**
**B1**

(12) # EUROPÄISCHE PATENTSCHRIFT

(45) Veröffentlichungstag der Patentschrift:
18.03.87

(21) Anmeldenummer: **84104859.8**

(22) Anmeldetag: **30.04.84**

(51) Int. Cl.⁴: **B 05 D 1/02 //**
**C02F1/56**

(54) **Verwendung flüssiger neutraler Einkomponenten-Koagulierungsmittel zur Koagulierung von Lacken und Beschichtungsmitteln.**

(30) Priorität: **07.05.83 DE 3316878**

(43) Veröffentlichungstag der Anmeldung:
**14.11.84 Patentblatt 84/46**

(45) Bekanntmachung des Hinweises auf die Patenterteilung:
**18.03.87 Patentblatt 87/12**

(84) Benannte Vertragsstaaten:
**AT BE DE FR GB IT NL SE**

(56) Entgegenhaltungen:
**DE-A-2 749 295**
**FR-A-1 489 064**
**FR-A-2 263 982**
**FR-A-2 277 613**
**GB-A-1 512 022**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Geke, Jürgen, Dr., Stoffeler Damm 108, D-4000 Düsseldorf (DE)**
Erfinder: **Rehm, Hans- Jörg, Haydnstrasse 6, D-4010 Hilden (DE)**

## Beschreibung

Die Erfindung betrifft die Verwendung von flüssingen neutralen Einkomponenten-Koagulierungsmitteln zur Koagulierung von Lacken und Beschichtungsmitteln.

Bei der Aufbringung von Lacken, Wachsen oder ähnlichen, nicht-wasserlösliche organische Substanzen enthaltende Beschichtungsmaterialien z.B. in der Automobilindustrie, gelingt es nicht, die Materialien restlos auf die zu beschichtenden Teile aufzubringen. Speziell bei der Lackierung von Kraftfahrzeugen fällt in den Lackspritzkabinen sog. Overspray an, das mittels eines Wasservorhangs aus den Lackspritzkabinen entfernt und in ein sog. Beruhigungsbecken gespült wird. Um einerseits die Funktion der wasserführenden Leitungs-, Düsen- und Berieselungssysteme durch z.B. klebende Lackpartikel nicht zu stören und andererseits das umlaufende Wasser von den aufgenommenen Inhaltsstoffen zu entsorgen, müssen zur Koagulierung der genannten Stoffe dem Wasser Chemikalien zugegeben werden. Dabei sollte die Entklebung der verspritzten und vom Wasser aufgenommenen Lackpartikel und deren Agglomeration zu einem austragungsfähigen Koagulat in einem Arbeitsgang erfolgen.

Je nach den technisch vorhandenen Anlagen wird nun ein Lackkoagulierungsmittel verwendet, wodurch entweder das Lack-Koagulat im Beruhigungsbecken flotiert, d.h. aufschwimmt, was ein Abschöpfen des Koagulates von der Wasseroberfläche ermöglicht, oder das Koagulat sedimentiert, wonach es mittels eines Kratzbandes vom Beckenboden abgeräumt wird.

Um Koagulierung, d.h. Entklebung der Lackpartikel und deren Agglomeration zu einem austragungsfähigen Koagulat zu erreichen, wurden dem umlaufenden Wasser bisher alkalische pulverförmige und alkalische flüssige Produkte sowie pulverförmige neutrale Produkte zugesetzt. Über ein aufwendiges Dosiersystem kann auch ein flüssiges Zweikomponenten-Koagulierungsmittel eingesetzt werden.

So werden in der GB-A- 1 512 022 flokulierende, d.h. den Zusammenschluß von Teilchen unter Einwirkung intermolekular brückenbildender Makromoleküle bewirkende Agenten beschrieben. Diese setzen sich zusammen aus als Klärmittel wirkenden anorganischen Metallsalzen wie Eisen(II)chlorid oder Aluminiumsulfat, und organischen kationischen Polymeren wie Polyvinylpyridin oder Polyaminen in wässriger Lösung.

Wasserlösliche kationische Polymere, die in Pulverform erhältlich sind und als Flockungsmittel Verwendung finden, werden in der DE-A- 27 49 295 beschrieben. Zur Verbesserung des Flockungsverhaltens bei gleichzeitiger Absenkung des Molekulargewichts des Polymeren und damit einhergehender Erhöhung der Löslichkeit des Produktes werden in Pulverform wasserlösliche anorganische Salze zugesetzt, wodurch man ein wasserlösliches kationisches Polymeres in Form einer festen Masse erhält.

In der FR-A-2 263 982 wird ein Verfahren zum Entfernen von Ölen, Lösungsmitteln und Lackrohstoffen aus Abwasser unter Verwendung von löslichen oder dispergierbaren Trägerstoffen und Flockungsmitteln beschrieben. Hierbei werden modifizierte Polysaccharide mit anionischen oder kationischen Eigenschaften zusammen mit kationischen bzw. anionischen Flockungsmitteln, wie Polyacrylamiden, Polyacrylaten, Polyiminen sowie Polyamidaminen einzeln oder im Gemisch eingesetzt. Gegebenenfalls können hierbei auch anorganische Flockungsmittel, wie Eisen- und Aluminiumsulfate oder -Chloride, allein oder zusammen mit organischen Flockungsmitteln Verwendung finden.

Gegenstand der FR-A-1 489 064 ist ein Zusatzmittel für Spülflüssigkeiten, die zur Lack-Koagulierung dienen, bestehend aus einem wasserlöslichen Alkalimetall- und/oder Erdalkalimetallsalz, einem in Wasser schwerlöslichen Hydroxid, beispielsweise Magnesium-, Eisen-, Aluminium-, Chrom- und vorzugsweise Calciumhydroxid, und einem Amin oder einer Mischung von Aminen, vorzugsweise einem Polyamin, cycloaliphatischen Diamin, Triethanolamin und Diethanolamin.

Die FR-A-2 277 613 beschreibt ein Verfahren zur Abscheidung von Farbnebeln von wasserverdünnbaren Lacken aus der Abluft von wasserberieselten Farbspritzanlagen. Hierbei setzt man dem zur Berieselung der Farbspritzanlage verwendeten Wasser wasserlösliche, schwerflüchtige, niedermolekulare salzartige Elektrolyte in solcher Menge zu, daß das spezifische Gewicht der wäßrigen Salzlösung bei 20 °C mindestens 1,01 beträgt. Als salzartige Elektrolyte kommen Salze der Metalle der 1. und 2. Hauptgruppe sowie der 1., 2., 4., 5., 6. und 8. Nebengruppe des periodischen Systems der Elemente mit anorganischen und/oder organischen Säureresten in Frage. Besonders bevorzugt werden Natriumchlorid, Calciumchlorid, prim. und sek. Natriumsulfat, prim., sek. und tert. Natriumphosphat, Ammoniumcarbonat und Ammoniumphosphat eingesetzt.

Die Verwendung derartiger pulverförmiger Koagulierungsmittel hat jedoch den wesentlichen Nachteil, daß sie für den Koagulierungsvorgang erst in Wasser suspendiert werden müssen, was nicht allein Probleme in der Dosierung der Mittel mit sich bringt. Vielmehr beeinträchtigt der für ein gutes Suspendieren der Pulverprodukte notwendige Rührvorgang die erwünschte und erfindungswesentliche Flockenbildung, was die Wirkungsweise beeinträchtigt und den Einsatz höherer Konzentrationen an Koagulierungsmittel erforderlich macht. Zudem ist der Einsatz von Koagulierungsmittel in Pulverform überall dort nicht möglich, wo eine Staubbildung peinlich vermieden werden muß.

Die pH-Werte der wässrigen Lösung bisher üblicherweise eingesetzter Koagulierungsmittel liegen meist im alkalischen Bereich. Damit wird erreicht, daß die einzelnen Lack- bzw. Wachsteilchen meist ausreichend entklebt werden und die Funktion der wasserführenden Systeme nicht gestört wird. Dies machte jedoch eine Überwachung der Alkalität der Bäder sowie ggfls. eine Neutralisation der Koagulatwässer vor Einleiten in die Kanalisation zwingend notwendig.

Infolge der Alkalität bzw. des erhöhten pH-Wertes können die Harze bzw. Bindemittel der Lacke hydrolysiert werden. Störende Schaumbildung ist die Folge, und relativ teure Antischaummittel müssen zusätzlich zugegeben werden.

Diesen Nachteilen versucht die Erfindung dadurch zu begegnen, daß seine Wirkungsweise nicht auf der Bildung voluminöser Adsorbentien, Flocken oder ähnlichem, wie bei den bisher üblichen Produkten, beruht. Sie bewirkt vielmehr ohne Bildung von Zwischenprodukten die Neutralisierung der elektrischen Randladungen der Lackpartikel sowie die anschließende Agglomeration der Mikroteilchen.

Dieses unterschiedliche physiko-chemische Verhalten ist von wesentlicher Bedeutung für die Dosierung. Sollen Pulverprodukte nicht über ein Pulverdosiergerät oder manuell zugegeben werden, so müssen diese Pulverprodukte vor der Anwendung suspendiert und dann den Umlaufwässern zugesetzt werden. Das erfindungsgemäße flüssige neutrale Produkt ermöglicht hingegen eine problemlose kontinuierliche automatische Steuerung der Dosierung. Eine diskontinuierliche und/oder manuelle Dosierung ist daneben auch möglich.

Ein besonders ökonomischer Einsatz ist zudem aufgrund der sehr geringen Wirkstoffkonzentrationen möglich, die zur Erzielung eines guten Koagulationsverhaltens notwendig sind.

Das erfindungsgemäß verwendete flüssige neutrale Produkt ist geeignet zur Koagulation sowohl aller üblichen Lacktypen, als auch von Beschichtungsmitteln wie Wachsen und Unterbodenschutz. Das erzielte Koagulat ist vollständig entklebt, jedoch nicht hart, hängt nicht an den anlagentechnischen Einrichtungen an und kann sehr gut ausgetragen werden. Weisse, wasserberieselte Spritzwände werden nicht verfärbt.

Die vorliegende Erfindung betrifft die Verwendung von flüssigen Einkomponenten-Koagulierungsmitteln, die Salze des Calciums und/oder Salze des Magnesiums sowie durch Protonierung oder Methylierung kationisch modifizierte Polyethylenimine in einem Verhältnis 50: 1 bis 1: 1 enthalten, zur Koagulierung von Lacken und Beschichtungsmitteln in wasserberieselten Spritzkabinen bei pH-Werten im Bereich von 6 bis 9, wobei in der eingesetzten Koagulierungslösung der Gehalt an Calcium oder Magnesiumsalzen 1 bis 50 ppm pro Stunde Betriebszeit und der Gehalt an Polyethyleniminen 0,1 bis 20 ppm pro Stunde Betriebszeit beträgt.

Die genannten Salze des Calciums und/oder Magnesiums müssen wasserlöslich sein. Besonders geeignet sind Salze des Calciums in Form von Nitrat und/oder Chlorid und/oder Salze des Magnesiums in Form von Nitrat, Chlorid und/oder Sulfat.

Die Polyethylenimine sind entweder durch Protonierung oder Alkylierung, in der Regel Methylierung, des Stickstoffs kationisch modifiziert bzw. in die entsprechenden Ammoniumsalze überführt. Der Modifizierungsgrad ist dabei unterschiedlich und hängt ab vom neutralen Ausgangspolymeren, von der entsprechenden Säure zur Protonierung bzw. von dem entsprechenden Alkylierungsagens. Tertiäre Stickstoffatome werden nicht vollständig protoniert bzw. alkyliert. Es sind protonierte und/oder methylierte Polyethylenimine verwendbar, die ein Molekulargewicht von $5 \times 10^4$ bis $5 \times 10^7$, vorzugsweise von $7,5 \times 10^4$ bis $5 \times 10^6$, aufweisen.

In Wasser gelöst, ergeben die verwendeten Mischungen aus den genannten Elektrolyten und den wasserlöslichen modifizierten Polyethyleniminen homogene Lösungen, die in der Regel die Flotation des Koagulates bewirken. Nach dem Abschöpfen der Lackreste kann das Umlaufwasser wiederverwendet werden. In kleineren Anlagen erfolgt der Lackaustrag je nach Lackbelastung ein- oder mehrmals wöchentlich von Hand. Größere Anlagen verfügen über sog. Schraber-Ketten, die von den Badoberflächen den Lackschlamm kontinuierlich oder auch diskontinuierlich entfernen.

In den zur Koagulierung von Lacken und Beschichtungsmitteln eingesetzten Anwendungslösungen können die wesentlichen Komponenten, anorganische Salze und Polyethylenimine, in einem unterschiedlichen Verhältnis enthalten sein. Dabei bewegt sich das Verhältnis der molaren Anteile der Komponenten in einem Bereich von 50: 1 bis 1: 1, vorzugsweise von 15: 1 bis 5: 1.

Den Rezepturen der erfindungsgemäßen Koagulierungsmittel können ggfls. wasserlösliche Biozide, wie z.B. Formaldehyd, Isothiazoline und deren Derivate sowie Pyridin-N-oxid und dessen Derivate zusätzlich zugegeben werden.

Die Herstellung der erfindungsgemäß verwendeten Mittel erfolgt so, daß entweder flüssige wässrige Konzentrate der Elektrolyten unter Zusatz von Polyethyleniminen und/oder weiteren Hilfssubstanzen hergestellt werden, oder aber die entsprechenden Wirkstoffe in einem Verhältnis von 50: 1 bis 1: 1 gemischt werden. Diese Mischungen können dann zu gegebener Zeit bzw. am Einsatzort durch einfaches Lösen in der zugehörigen Menge Wasser in die gewünschte flüssige Konzentratform gebracht und so dem Umlaufwasser zugesetzt werden. Die Zugabe erfolgt zweckmässig an einer Stelle mit guter Turbulenz des Umlaufwassers bei laufender Pumpe, um eine schnelle Verteilung zu gewährleisten. Man erhält auf diesem Wege vollständig homogene Lösungen, deren pH-Wert bei Bedarf nach bekannten Methoden auf 6 bis 9 eingestellt werden kann.

Die Dosierung der erfindungsgemäß verwendeten Koagulierungsmittel erfolgt entweder kontinuierlich mittels geeigneter Dosierpumpen, oder diskontinuierlich, z.B. einmal pro Tag manuell. Dabei werden der Koagulierungslösung die erfindungsgemäß verwendeten Koagulierungsmittel in einer solchen Menge zugesetzt, daß der Gehalt an Salzen des Calciums und/oder Magnesiums 1 bis 50 ppm pro Stunde Betriebszeit und der Gehalt an modifizierten Polyethyleniminen 0,1 bis 20 ppm pro Stunde Betriebszeit beträgt. Dies entspricht 1 bis 50 g pro m³ Umlaufflüssigkeit pro Stunde Betriebszeit der Anlage bzw. 0,1 bis 20 g pro m³ Umlaufflüssigkeit pro Stunde Betriebszeit der Anlage.

Die Erfindung wird durch die nachstehenden Beispiele näher erläutert.

Erfindungsgemässe Rezepturen der neutralen Koagulierungsmittel sind die folgenden, wobei sich die Angaben als Gewichtsprozente verstehen:

**Beispiele:**

1) 35 % Calciumnitrat
7 % protoniertes Polyethylenimin
Rest Wasser
2) 30 % Magnesiumnitrat
5 % Magnesiumsulfat
5 % methyliertes Polyethylenimin
Rest Wasser
3) 20 % Calciumnitrat
10 % Magnesiumnitrat
5 % protoniertes Polyethylenimin
Rest Wasser
4) 60 % Calciumnitrat
10 % Magnesiumchlorid
4 % methyliertes Polyethylenimin
Rest Wasser
5) 35 % Calciumchlorid
5 % Magnesiumchlorid
4 % methyliertes Polyethylenimin
Rest Wasser

**Patentanspruch**

1) Verwendung von flüssigen Einkomponenten-Koagulierungsmitteln, die
a) Salze des Calciums in Form von Nitrat und/oder Chlorid und/oder Salze des Magnesiums in Form von Nitrat, Chlorid und/oder Sulfat sowie
b) Polyethylenimine, die durch Protonierung oder Methylierung kationisch modifiziert sind,
in einem Verhältnis (a) zu (b) von 50: 1 bis 1: 1, bevorzugt 15: 1 bis 5: 1 enthalten, zur Koagulierung von Lacken und Beschichtungsmitteln in wasserberieselten Spritzkabinen bei pH-Werten im Bereich von 6 bis 9, wobei in der eingesetzten Koagulierungslösung der Gehalt an (a) 1 - 50 ppm pro Stunde Betriebszeit der Anlage und der Gehalt an (b) 0,1 - 20 ppm pro Stunde Betriebszeit der Anlage beträgt.

**Claim**

1. The use of liquid one-component coagulating agents containing
a) salts of calcium in the form of nitrate and/or chloride and/or salts of magnesium in the form of nitrate, chloride and/or sulfate and
b) polyethylene imines cationically modified by protonization or methylation,
in a ratio of (a) to (b) of from 50:1 to 1:1 and preferably of from 15:1 to 5:1, for coagulating lacquers and coating compositions in water-sprinkled spray cabins at pH-values of from 6 to 9, the content of (a) in the coagulating solution used being from 1 to 50 ppm per hour running time of the plant and the content of (b) being from 0.1 to 20 ppm per hour running time of the plant.

**Revendication**

Utilisation d'agents de coagulation liquides à un composant contenant:
a) des sels de calcium sous forme de nitrate et/ou de chlorure et/ou de sels de magnésium sous forme de nitrate, de chlorure et/ou de sulfate, ainsi que
b) des polyéthylène-imines qui sont modifiées par voie cationique par protonisation ou méthylation,
dans un rapport (a) à (b) de 50:1 à 1:1, de préférence, de 15:1 à 5:1, pour la coagulation de peintures et d'agents d'enduction dans des cabines de pulvérisation à ruissellement d'eau à des pH se situant dans l'intervalle de 6 à 9, tandis que, dans la solution de coagulation utilisée, la teneur en (a) est de 1-50 parties par million par heure de temps de fonctionnement de l'installation et que la teneur en (b) est de 0,1 à 20 parties par million par heure de temps de fonctionnement de l'installation.